# EUROPEAN PATENT APPLICATION

(11) **EP 4 613 701 A1**
(43) Date of publication of application: **10.09.2025**
(21) Application number: 24161825.5
(22) Date of filing: 06.03.2024
(51) Int. Cl.: C01B 3/38

(54) **AVOIDING MOISTURE DRIVEN CATALYST DEACTIVATION IN A REFORMING PROCESS**

(71) Applicant: Johnson Matthey Public Limited Company, London EC2V 7AD (GB)
(72) Inventor: The designation of the inventor has not yet been filed
(74) Representative: Johnson Matthey Plc

(57) **Abstract**

The specification describes a steam reforming process in which a hydrocarbon feed is preheated in a first heat exchanger, steam is injected, and the resulting stream is then preheated in a second heat exchanger. The resulting stream is fed to an autothermal reformer, or a gas-heated reformer followed by an autothermal reformer. Effluent from the reforming operations is fed sequentially to the second heat exchanger then the first heat exchanger in order to pre-heat the hydrocarbon and steam mixture. The specification also describes a chemical plant arranged to carry out the steam reforming process, and a method of retrofitting a chemical plant which initially comprises a fired reformer, by removing the fired reformer and replacing it with an autothermal reformer or an autothermal reformer and gas-heated reformer.

## Description

### Field

The present invention relates to steam reforming processes which use an autothermal reformer or a gas-heated reformer and an autothermal reformer.

### Background

Steam reforming of hydrocarbons is typically carried out by treating a feed stream comprising hydrocarbons and steam in the presence of a reforming catalyst to produce a synthesis gas comprising H₂ and CO (syngas). It is important to ensure that the mixed stream of hydrocarbons and steam fed to reforming operations is free of moisture, because any moisture in this stream could deactivate the reforming catalyst.

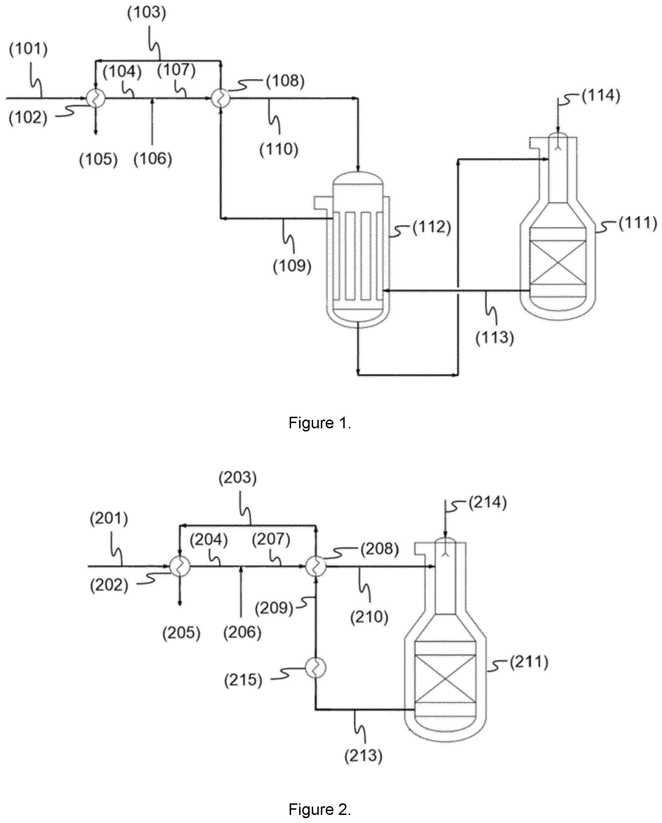

One way of avoiding the presence of moisture in the stream to reforming operations is to ensure that this stream is well above its dew point. This can be achieved for instance by heating the stream using a fired reformer prior to reforming operations. For example, WO2022/003312A1 describes a process for producing hydrogen and exemplifies a flowsheet in its Figure 1. A desulfurized natural gas is fed to a saturator vessel where it becomes saturated with steam. Additional steam is then injected into the saturated desulfurized natural gas and the resulting mixture is heated by a fired heater before being fed to reforming operations. A disadvantage of this arrangement is that the fired heater is a source of CO₂ emissions if a hydrocarbon fuel is used. Although the fired heater could be fuelled using hydrogen, this would reduce the yield from the process.

An alternative solution would be to inject superheated steam, i.e. steam that has been heated above its boiling point, upstream of reforming operations. However, this still runs the risk of moisture forming in the stream before reforming operations, for instance if the temperature and/or pressure of the hydrocarbon stream, to which the superheated steam is injected, is too low.

There is a need for an alternative processes which avoid moisture from forming in the stream fed to reforming operations, and ideally which do not require the use of superheated steam or a fired heater to pre-heat the hydrocarbon/steam mixture.

### Summary of the Invention

The inventors have developed a process which reliably avoids moisture forming in the hydrocarbon/steam mixture which is sent to reforming operations, by making more efficient use of the heat available from crude syngas generated by the reforming operations. In the present invention the hydrocarbon feed is pre-heated in a first heat exchanger, steam is injected, and the resulting stream is then pre-heated in a second heat exchanger. The first and second heat exchangers make use of a reformed gas stream generated by the reforming processes, as will be described in detail below. This arrangement allows the feed to remain above its dew point after steam addition, thus minimising the risk of condensate formation.

In a first aspect the invention relates to a steam reforming process, comprising the steps of:
(i) pre-heating a first hydrocarbon feedstock stream (101, 201) in a first heat exchanger (102, 202) by heat exchange with a partially cooled crude syngas stream (103, 203), to generate a pre-heated first hydrocarbon feedstock stream (104, 204) and a cooled crude syngas stream (105, 205);
(ii) injecting steam (106, 206) into the pre-heated first hydrocarbon feedstock stream to generate a second hydrocarbon feedstock stream (107, 207);
(iii) pre-heating the second hydrocarbon feedstock stream in a second heat exchanger (108, 208) by heat exchange with a crude reformed syngas stream (109, 209), to generate the partially cooled crude syngas stream and a pre-heated second hydrocarbon feedstock stream (110, 210) with a temperature of 400-475 °C;
(iv-a) carrying out steam reforming on the pre-heated second hydrocarbon feedstock stream in an autothermal reformer (211) and using effluent (213) from the autothermal reformer to generate the crude reformed syngas stream; or
(iv-b) carrying out steam reforming on the pre-heated second hydrocarbon feedstock stream in a gas-heated reformer (112) having a tube side and a shell side, feeding tube side effluent from the gas-heated reformer to an autothermal reformer (111), feeding effluent (113) from the autothermal reformer to the shell side of the gas-heated reformer, and using shell side effluent to generate the crude reformed syngas stream.

This process avoids moisture formation and deactivation of the reforming catalyst, without requiring superheated steam injection or pre-heating of the hydrocarbon and steam mixture by means of a fired heater.

Whilst the terms "first heat exchanger" and "second heat exchanger" are used herein, it will be appreciated from the following description that there may be multiple heat exchangers at either or both of these locations which may be arranged in series, parallel, or series-parallel.

The invention also relates to a chemical plant comprising:
(i) a first heat exchanger (102, 202) arranged to accept a first hydrocarbon feedstock stream (101, 201) and a partially cooled crude syngas stream (103, 203), and to generate a pre-heated first hydrocarbon feedstock stream (104, 204) and a cooled crude syngas stream (105, 205);
(ii) to inject steam (106, 206) into the pre-heated first hydrocarbon feedstock stream to generate a second hydrocarbon feedstock stream (107, 207);
(iii) a second heat exchanger (108, 208) arranged to accept the second hydrocarbon feedstock stream and a crude reformed syngas stream (109, 209), and to generate the partially cooled crude syngas stream and a pre-heated second hydrocarbon feedstock stream (110, 210) with a temperature of 400-475 °C;
(iv-a) an autothermal reformer, arranged to accept the pre-heated second hydrocarbon feedstock stream and generate an effluent stream (213), and arranged to use the effluent stream generate the crude reformed syngas stream; or
(iv-b) a gas-heated reformer having a tube side and a shell side, the gas-heated reformer arranged to accept the pre-heated second hydrocarbon feedstock stream and generate a tube side effluent; an autothermal reformer, arranged to accept the tube side effluent and generate an autothermal reformer effluent; arranged to feed the autothermal reformer effluent to the shell side of the gas-heated reformer and generate a shell side effluent, wherein the shell side effluent is used to generate the crude reformed syngas stream.

In many existing chemical plants crude syngas is generated by a fired reformer. Typically such fired reformers comprise a series of catalyst-filled tubes through which a mixture of hydrocarbon and steam is fed. Heat to drive the endothermic steam reforming reaction is provided by combusting fuel within a radiant box. Such reformers may be top-fired or side-fired. The fired reformer is a major source of CO₂ emissions on the chemical plant. It is known to reduce the CO₂ emissions from a fired reformer by substituting the hydrocarbon fuel with a hydrogen fuel, for example as is described in WO2023/242536A1 and WO2023/218160A1. In these arrangements the plant is retrofitted with a unit comprising (i) a partial oxidation reactor or a reforming unit, (ii) a water-gas shift unit, and (iii) a carbon dioxide removal unit. A hydrogen stream is recovered from the carbon dioxide removal unit and fed to the fired reformer as fuel. Whilst these arrangements provide a high degree of decarbonisation, they are contingent on having a suitable infrastructure to capture the CO₂ removed by the carbon dioxide removal unit, for instance pipeline infrastructure to store the CO₂ in underground reservoirs.

In a further aspect the invention provides method of retrofitting a chemical plant which initially comprises a fired reformer, the method comprising the step of:
removing the fired reformer;
installing an autothermal reformer or an autothermal reformer and a gas-heated reformer;
installing a first heat exchanger and a second heat exchanger;
wherein post retrofit the chemical plant is arranged:
   (i) to pre-heat a first hydrocarbon feedstock stream in the first heat exchanger by heat exchange with a partially cooled crude syngas stream, to generate a pre-heated first hydrocarbon feedstock stream;
   (ii) to inject steam into the pre-heated first hydrocarbon feedstock stream to generate a second hydrocarbon feedstock stream;
   (iii) to pre-heat the second hydrocarbon feedstock stream in the second heat exchanger by heat exchange with a crude reformed syngas stream, to generate the partially cooled crude syngas stream and a pre-heated second hydrocarbon feedstock stream with a temperature of 400-475 °C;
   (iv-a) to carry out steam reforming on the pre-heated second hydrocarbon feedstock stream in an autothermal reformer and use effluent from the autothermal reformer to generate the crude reformed syngas stream; or
   (iv-b) to carry out steam reforming on the pre-heated second hydrocarbon feedstock stream in a gas-heated reformer having a tube side and a shell side, feeding tube side effluent from the gas-heated reformer to an autothermal reformer, feeding effluent from the autothermal reformer to the shell side of the gas-heated reformer, and using shell side effluent to generate the crude reformed syngas stream.

In this method a fired reformer is replaced by an autothermal reformer or an autothermal reformer and a gas-heated reformer. The feed is efficiently pre-heated using effluent from the autothermal reformer or gas-heated reformer, and this arrangement avoids moisture from condensing on the reforming catalyst. An advantage of this retrofit solution compared to the solutions described in WO2023/242536A1 and WO2023/218160A is that it does not require the generation of decarbonised H₂ for use as an external fuel, and therefore does not generate a CO₂ product stream requiring storage. The decarbonisation benefit comes from improved process efficiency, rather than carbon capture. This retrofit solution may therefore be more appropriate in locations where there is not any suitable infrastructure to capture CO₂.

### Description of the Figures

Figure 1 illustrates an arrangement according to the invention in which the reforming section comprises a gas-heated reformer and an autothermal reformer. A first hydrocarbon feedstock stream (101) is fed to a first heat exchanger (102) where it is subjected to heat exchange with a partially cooled crude syngas stream (103) to generate a pre-heated first hydrocarbon feedstock stream (104) and a cooled crude syngas stream (105). The pre-heated first hydrocarbon feedstock stream is injected with steam (106) to generate a second hydrocarbon feedstock stream (107) which is fed to a second heat exchanger (108) where it is subjected to heat exchange with a crude reformed syngas stream (109) to generate a pre-heated second hydrocarbon feedstock stream (110) and the partially cooled crude syngas stream. The pre-heated second hydrocarbon feedstock stream is fed to a gas-heated reformer (112), effluent from the shell side of the gas-heated reformer is fed to an autothermal reformer (111) together with an oxygen-containing gas stream (114). Effluent (113) from the autothermal reformer is fed to the shell side of the gas-heated reformer to provide heat for steam reforming reactions taking place on the tube side. In the arrangement shown the effluent from the gas-heated reformer is used directly as the crude reformed gas stream in the second heat exchanger.
   Analogous reference numerals are used in connection with Figures 2-6 as described above for Figure 1, e.g. (101)→(201)→(301)→(401)→(501)→(601).
Figure 2 illustrates an arrangement according to the invention in which the reforming section comprises an autothermal reformer. The arrangement is analogous to Figure 1 except that the second hydrocarbon feedstock stream (210) is fed to the autothermal reformer (211). The effluent (213) from the autothermal reformer is first cooled in a third heat exchanger (215) to generate the crude reformed syngas stream (209) which is used in the second heat exchanger (208).

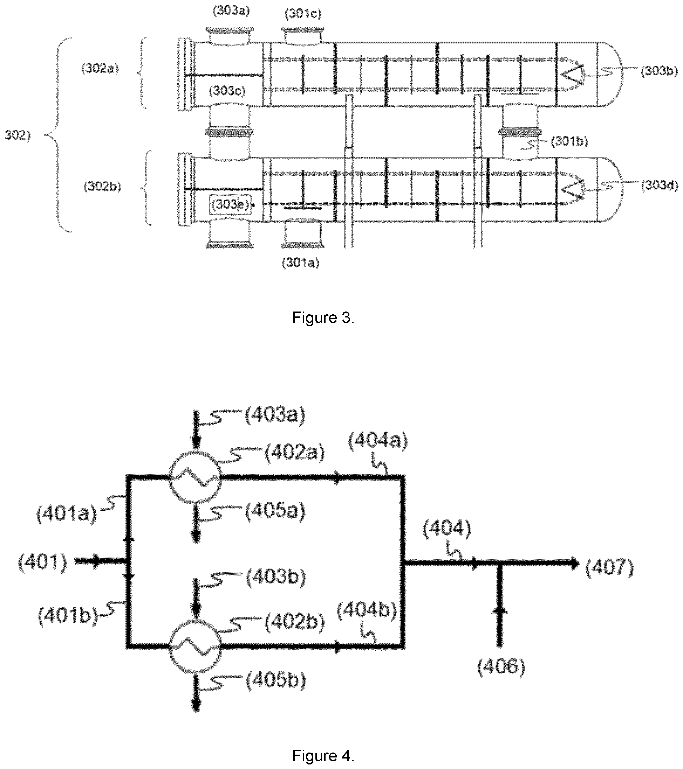

Figure 3 illustrates an arrangement in which the first heat exchanger (302) comprises two two-pass heater exchangers (302a, 302b) arranged in series. The first hydrocarbon feedstock stream (301) passes sequentially through the heat exchangers and is gradually heated as shown by locations (301a, 301b, 301c). The partially cooled crude syngas stream (303) passes sequentially through the heat exchangers and is gradually cooled as shown by locations (303a, 303b, 303c, 303d, 303e).
Figure 4 illustrates an arrangement in which the first heat exchanger is replaced by two heat exchangers (402a, 402b) arranged in parallel. The first hydrocarbon feedstock stream (401) is split into streams (401a, 401b) which are fed to heat exchangers (402a, 402b). Each heat exchanger is fed with the partially cooled crude syngas stream (403a, 403b) and generates a cooled crude syngas stream (405a, 405b) and pre-heated first hydrocarbon feedstock streams (404a, 404b) which are combined into stream (404). Steam (406) is added to generate the second hydrocarbon feedstock stream (407).

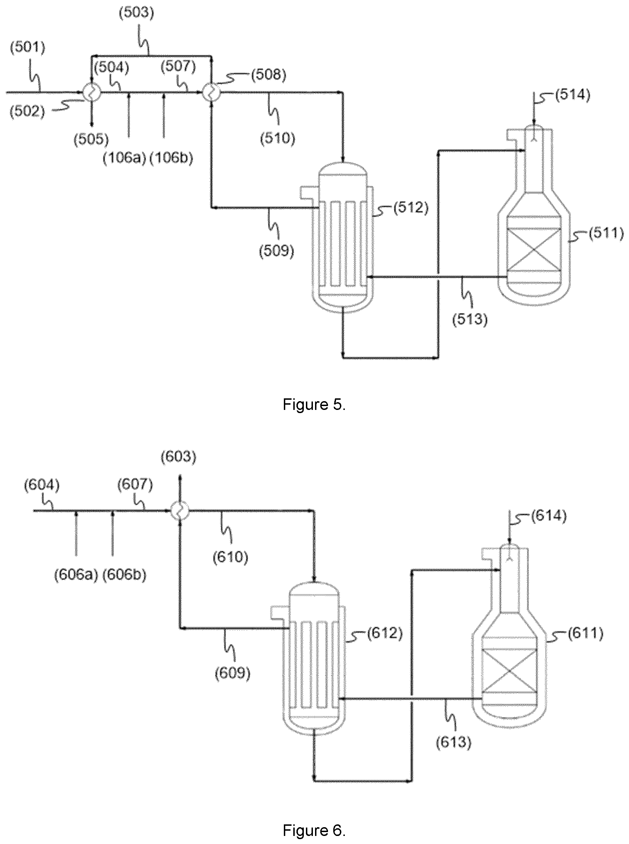

Figure 5 illustrates an arrangement which is identical to that shown in Figure 1, except that steam stream (106) has been replaced by two separate steam streams (506a) and (506b). This flowsheet is modelled in Example 1.
Figure 6 illustrates an arrangement without the first heat exchanger. This flowsheet is similar to the flowsheet shown in Figure 5 except that there is no heat exchanger corresponding to (502). This flowsheet is modelled in Example 2 (comparative).

### Detailed description

Sub-headings are for convenience only and are not intended to limit the invention.

The following sections will primarily describe the process, but it will be appreciated that features described as being applicable in connection with the process also apply to the chemical plant (second aspect) and retrofit method (third aspect) of the invention.

### Autothermal reformer

The skilled person will be familiar with the design of autothermal reformers and detail of their arrangement and suitable catalysts are summarised in WO2022/003312A1. An autothermal reformer generally comprises a burner disposed at the top of the reformer, to which a hydrocarbon-containing fuel stream and an oxygen-containing gas are fed, a combustion zone beneath the burner through which a flame extends, and a fixed bed of particulate steam reforming catalyst disposed below the combustion zone. In autothermal reforming, the heat for the endothermic steam reforming reactions is therefore provided by combustion of a portion of hydrocarbon in the hydrocarbon-containing fuel stream. The hydrocarbon-containing fuel stream is typically fed to the top of the reformer and the oxygen-containing gas fed to the burner, mixing and combustion occur downstream of the burner generating a heated gas mixture the composition of which is brought to equilibrium as it passes through the steam reforming catalyst.

### Gas-heated reformer and autothermal reformer

The skilled person will be familiar with the design of gas-heated reformers and detail of their arrangement and suitable catalysts are summarised in WO2022/003312A1.

In an arrangement with a gas-heated reformer and an autothermal reformer, the pre-heated second hydrocarbon feedstock stream is fed to a gas-heated reformer comprising tubes which contain a steam reforming catalyst. The pre-heated second hydrocarbon feedstock stream is fed to the tubes ("tube side") where it undergoes steam reforming reactions, heated by the effluent from the autothermal reformer passing through a shell surrounding the tubes ("shell side"). The effluent from the tube side of the gas-heated reformer is fed to an autothermal reformer, together with an oxygen-containing steam (which may be air, oxygen-enriched air, or oxygen). The oxygen-containing stream is combusted within the autothermal reformer in order to provide heat for steam reforming reactions taking place in the presence of a catalyst within the autothermal reformer. The effluent from the autothermal reformer is fed to the shell side of the gas-heated reformer.

### Crude reformed syngas stream

The effluent from the autothermal reformer (step (iv-a)), or from the gas-heated reformer shell side when an autothermal reformer and a gas-heated reformer are used (step (iv-b)), is used to produce the crude reformed syngas stream used in the second heat exchanger.

The crude reformed syngas stream used in the second heat exchanger preferably has a temperature in the range of 400-600 °C, i.e. the temperature (T) of this stream at the inlet of the second heat exchanger is 400 °C ≤ T ≤ 600 °C. Typically the temperature of the crude reformed syngas stream is 425-500 °C. It will be appreciated that the temperature of the crude reformed syngas stream is chosen to be higher than that of the second hydrocarbon feedstock stream, in order to ensure heating of the second hydrocarbon feedstock stream in the second heat exchanger.

The effluent exiting the autothermal reformer is typically at a temperature of 950-1020 °C and can therefore advantageously be used as a source of high grade heat. It is preferred that the effluent from the autothermal reformer is first used to generate high temperature steam and/or for heating other streams within the process, before being used in the second heat exchanger.

In the case where steam reforming is carried out using an autothermal reformer and a gas-heated reformer (step (iv-b)), due to cooling which takes place on the shell side of the gas-heated reformer, the shell side gas-heated reformer effluent may already be at a low enough temperature to be used in the second heat exchanger directly without additional cooling. Therefore, in some embodiments step (iv-b) is carried out and the shell side effluent is used as the crude reformed syngas stream without further cooling. Alternatively, the shell side effluent is first used to generate high temperature steam and/or for heating other streams within the process, before being used in the second heat exchanger.

### First and second heat exchangers

The following section describes arrangements which may apply to both the first and second heat exchangers.

One type of preferred heat exchanger is a plate and frame heat exchanger. Such heat exchangers are commercially available, for instance from Alfa Laval under the Packniox^{™} brand.

Another preferred type of heat exchanger is a shell and tube heat exchanger. The design of such exchangers will be well-known to those skilled in the art, but in brief, these exchangers contain a tube bundle through which a first fluid runs, and a shell through which a second fluid runs. Typically the heating medium runs through the tubes and the first hydrocarbon feedstock stream (in the case of the first heat exchanger) or the second hydrocarbon feedstock stream (in the case of the second heat exchanger) runs through the shell. It is also within the scope of the invention for the heating medium to instead run through the shell and the first or second hydrocarbon feedstock stream (as applicable) to run through the tubes. The shell usually includes baffles in order to direct the fluid in and out of the shell. The tube bundle may be arranged as a single-pass, meaning that the fluid in the tube bundle enters one end of the heat exchanger and exits on the other end. Alternatively, the tube bundle may be arranged as a two-pass, meaning that the fluid in the tube bundle enters and exits the heat exchanger at the same end; this can be achieved by including U shaped tubes. Three- or more passes are also possible (referred to as multi-pass arrangements hereafter). Two- or multi-pass arrangements increase the amount of heat transfer available, but care must be taken to avoid temperature cross in the reactor. Temperature cross occurs if the outlet temperature of the fluid used as the heating medium is below that of the outlet temperature of the fluid being heated. One way of avoiding temperature cross in a multi-pass arrangement is to arrange two two-pass heat exchangers in series. An example of this arrangement is shown in Figure 3.

If the mass flow of the feedstock stream is sufficiently high, then it is preferable to have two or more heat exchangers arranged in parallel. In this arrangement the first or second hydrocarbon feedstock stream (as applicable) is split into two or more streams which are each individually fed to a heat exchanger. Each heat exchanger is also fed with a heating medium. Following heat exchange the feedstock streams, now cooled, are combined. This arrangement is illustrated in Figure 4 for the first hydrocarbon feedstock stream. For the avoidance of doubt, it is also possible to have arrangements in which the feedstock stream is split and fed to two or more two- or multi-pass heat exchangers; this arrangement is referred to herein as series-parallel.

### First heat exchanger

The role of the first heat exchanger is to pre-heat the first hydrocarbon feedstock stream by heat exchange with the partially cooled syngas stream to generate a pre-heated first hydrocarbon feedstock stream. The temperature of the pre-heated first hydrocarbon feedstock stream should be sufficiently high so that, after steam injection, the resulting stream is still comfortably above its dew point.

In one embodiment the first heat exchanger is a shell and tube heat exchanger with a single pass arrangement. This may be appropriate if there is no temperature cross in the exchanger and the logarithmic mean temperature difference (LMTD) is relatively large.

In one embodiment the first heat exchanger is a shell and tube heat exchanger with a two- or multi-pass arrangement. This may be appropriate if there is no temperature cross in the exchanger and the LMTD is relatively small.

In one embodiment the first heat exchanger comprises two two-pass shell and tube heat exchangers arranged in series. This may be appropriate to avoid temperature cross. This arrangement is shown in Figure 3.

In one embodiment the first heat exchanger comprises two or more heat exchangers arranged in parallel. This may be appropriate if the mass flow of the first hydrocarbon feedstock stream is high.

In one embodiment the first heat exchanger comprises two or more two- or multi-pass heat exchangers arranged in series-parallel. This may be appropriate if the mass flow of the first hydrocarbon feedstock stream is high and to avoid temperature cross in the exchanger.

### Steam injection

Steam is injected between the first and second heat exchangers. The steam may be saturated steam or superheated steam. By saturated steam we mean steam with a temperature at its boiling point at the relevant pressure. By superheated steam we mean steam with a temperature above its boiling point. It is preferred that the steam is saturated steam because of the relatively lower energy demands of producing saturated steam compared to superheated steam. Furthermore, particularly in the case of retrofitting, saturated steam is more readily available on the chemical plant.

The amount of steam injected depends on S:C ratio of the first hydrocarbon feedstock stream and the desired S:C ratio of the pre-heated second hydrocarbon feedstock stream (which is fed to the reforming section). For the avoidance of doubt, a feed containing 75 mol% H₂O and 25 mol% CH₄ has a steam to carbon ratio of 3.0 : 1, a feed containing 75 mol% H₂O, 10 mol% CO and 15 mol% CH₄ has a steam to carbon ratio of 5.0 : 1 and so on. A steam to carbon ratio of at least 2.0 : 1 is required to theoretically convert all of the carbon present in hydrocarbons into CO₂ and H₂. Steam to carbon ratios below 2.0 : 1 may be used if additional steam is added between the GHR and ATR, and/or if addition steam is added downstream of the reforming section (e.g. if water-gas shift stages are included) and/or if the process operates with a recycle of hydrocarbon-containing gas separated downstream of the reforming section. Steam to carbon ratios above 2.0 to 1 may be beneficial to ensure that sufficient steam is present for complete conversion of hydrocarbons in the feed. Because of the energy cost of raising steam it is preferred that the steam to carbon ratio is not more than 3.5 : 1.

### Second heat exchanger

The role of the second heat exchanger is to pre-heat the second hydrocarbon feedstock stream by heat exchange with the crude reformed syngas stream to generate a pre-heated second hydrocarbon feedstock stream with a temperature of 400-475 °C. Typically it is desirable for the pre-heated second hydrocarbon feedstock stream to have a temperature of 425-475 °C.

In one embodiment the second heat exchanger is a shell and tube heat exchanger with a single pass arrangement. This may be appropriate if there is no temperature cross in the exchanger and the logarithmic mean temperature difference (LMTD) is relatively large.

In one embodiment the second heat exchanger is a shell and tube heat exchanger with a two- or multi-pass arrangement. This may be appropriate if there is no temperature cross in the exchanger and the LMTD is relatively small.

In one embodiment the second heat exchanger comprises two two-pass shell and tube heat exchangers arranged in series. This may be appropriate to avoid temperature cross.

In one embodiment the second heat exchanger comprises two or more heat exchangers arranged in parallel. This may be appropriate if the mass flow of the second hydrocarbon feedstock stream is high. It will be appreciated that, because of the steam injection, the mass flow of the second hydrocarbon feedstock stream is greater than that of the first hydrocarbon feedstock stream.

In one embodiment the second heat exchanger comprises two or more two- or multi-pass heat exchangers arranged in series-parallel. This may be appropriate if the mass flow of the second hydrocarbon feedstock stream is high and to avoid temperature cross in the exchanger.

It is preferred that the pre-heated second hydrocarbon feedstock stream is fed, without additional heating, to the autothermal reformer or gas-heated reformer. This avoids the need for a fired heated which is present in some prior art arrangements.

### Downstream processing of the cooled crude syngas stream

A cooling and dewatering step is typically carried out on the cooled crude syngas stream downstream of the second heat exchanger to generate a cooled dewatered syngas. If one or more shift stages are carried out on the cooled crude syngas stream then a cooling and dewatering step is carried out downstream of the one or more shift stages to generated the cooled dewatered syngas.

The dewatered syngas may be used in a downstream processes selected from the group consisting of: the production of methanol, the production of hydrogen, the production of ammonia, and Fischer-Tropsch synthesis.

In some embodiments a step of carbon dioxide removal is carried out downstream of the dewatering step. When high purity hydrogen (e.g. >99 vol% H₂) is desired, a step of hydrogen purification is typically carried out downstream of carbon dioxide removal.

### Miscellaneous

In some embodiments a saturator column may be located upstream of the first heat exchanger. The saturator column ensures that the first hydrocarbon feedstock stream is already saturated with steam, in order to minimize the amount of steam which needs to be injected in order to achieve the desired S:C ratio.

### Chemical plant

The invention also relates to a chemical plant arranged to carry out the process described in preceding sections.

### Retrofit method

Whilst the arrangements described herein may be suitable for grassroots plants, the arrangement may also be introduced by retrofitting the reforming section of an existing chemical plant. In a preferred embodiment the existing chemical plant comprises a fired reformer, in which fuel is combusted within a radiant box of the fired reformer to provide heat to drive the steam reforming reactions. In the retrofit method the fired reformer is removed and an autothermal reformer, or gas-heated reformer and autothermal reformer, are installed. First and second heat exchangers are also installed. Post-retrofit the reforming section is arranged to carry out the process described above.

### Example

### Example 1 (according to the invention)

The flowsheet shown in Figure 5 was simulated using modelling software. The only difference relative to Figure 1 was that instead of injecting a single steam stream (106), steam was injected into stream (504) sequentially in two stages; a first lower pressure steam stream (506a) followed by a second higher pressure steam stream (506b). Properties of selected streams and their H₂O content are shown in Table 1.

**Table 1.**

| **Stream number** | **501** | **503** | **504** | **505** | **507** | **509** | **510** |
|---|---|---|---|---|---|---|---|
| Temperature (°C) | 185 | 460 | 400 | 350 | 335 | 550 | 450 |
| Pressure (bara) | 25.7 | 17.7 | 25.6 | 17.7 | 25.6 | 18.0 | 25.3 |
| Mass flow (metric tonne /h) | 10.0 | 21.2 | 10.0 | 21.2 | 16.3 | 21.2 | 16.3 |
| H₂O content (mol%) | 46.6 | 33.2 | 46.6 | 33.2 | 66.9 | 33.2 | 66.9 |
| Vapour fraction (w/w) | 1.00 | 1.00 | 1.00 | 1.00 | 1.00 | 1.00 | 1.00 |

With intermediate steam injection the vapour fraction remains at 1.00 throughout, showing that no condensate is developing and therefore minimising the risks associated with catalyst deactivation.

### Example 2 (comparative)

The flowsheet shown in Figure 6 was simulated using modelling software. Properties of selected streams and their H₂O content are shown in Table 2.

**Table 2.**

| **Stream number** | **601** | **603** | **607** | **609** | **610** |
|---|---|---|---|---|---|
| Temperature (°C) | 185 | 350 | 205 | 550 | 450 |
| Pressure (bara) | 25.7 | 17.7 | 25.7 | 18.0 | 25.3 |
| Mass flow (metric tonne /h) | 9.9 | 21.2 | 16.3 | 21.1 | 16.3 |
| H₂O content (mol%) | 45.8 | 33.2 | 66.9 | 33.2 | 66.9 |
| Vapour fraction (w/w) | 1.00 | 1.00 | 0.985 | 1.00 | 1.00 |

In this arrangement condensate developed in line (607) upstream of the heat exchanger. In this arrangement water could accumulate in the pipe and carry through to the gas-heated reformer and damage the catalyst.

## Claims

1. A steam reforming process, comprising the steps of:
(i) pre-heating a first hydrocarbon feedstock stream (101, 201) in a first heat exchanger (102, 202) by heat exchange with a partially cooled crude syngas stream (103, 203), to generate a pre-heated first hydrocarbon feedstock stream (104, 204) and a cooled crude syngas stream (105, 205);
(ii) injecting steam (106, 206) into the pre-heated first hydrocarbon feedstock stream to generate a second hydrocarbon feedstock stream (107, 207);
(iii) pre-heating the second hydrocarbon feedstock stream in a second heat exchanger (108, 208) by heat exchange with a crude reformed syngas stream (109, 209), to generate the partially cooled crude syngas stream and a pre-heated second hydrocarbon feedstock stream (110, 210) with a temperature of 400-475 °C;
(iv-a) carrying out steam reforming on the pre-heated second hydrocarbon feedstock stream in an autothermal reformer (211) and using effluent (213) from the autothermal reformer to generate the crude reformed syngas stream; or
(iv-b) carrying out steam reforming on the pre-heated second hydrocarbon feedstock stream in a gas-heated reformer (112) having a tube side and a shell side, feeding tube side effluent from the gas-heated reformer to an autothermal reformer (111), feeding effluent (113) from the autothermal reformer to the shell side of the gas-heated reformer, and using shell side effluent to generate the crude reformed syngas stream.

2. A steam reforming process according to claim 1, wherein the first heat exchanger and/or the second heat exchanger is a plate and frame heat exchanger.

3. A steam reforming process according to claim 1, wherein the first heat exchanger and/or the second heat exchanger is a shell and tube heat exchanger with a single-pass, two-pass or multi-pass arrangement.

4. A steam reforming process according to claim 3, wherein the first heat exchanger and/or the second heat exchanger comprises two two-pass shell and tube heat exchangers arranged in series.

5. A steam reforming process according to any of claims 1 to 4, wherein the first heat exchanger and/or the second heat exchanger comprises two or more heat exchangers arranged in parallel or series-parallel.

6. A steam reforming process according to any of claims 1 to 5, wherein the steam injected in step (ii) is saturated steam.

7. A steam reforming process according to any of claims 1 to 6, wherein the pre-heated second hydrocarbon feedstock stream is fed, without additional heating, to the autothermal reformer or gas-heated reformer.

8. A steam reforming process according to any of claims 1 to 7, wherein step (iv-a) is carried out and the effluent from the autothermal reformer is first used to generate high temperature steam and/or for heating other streams within the process.

9. A steam reforming process according to any of claims 1 to 7, wherein step (iv-b) is carried out and the shell side effluent is first used to generate high temperature steam and/or for heating other streams within the process.

10. A steam reforming process according to any of claims 1 to 7, wherein step (iv-b) is carried out and the shell side effluent is used as the crude reformed syngas stream without additional cooling.

11. A steam reforming process according to any of claims 1 to 10, wherein a saturator column is located upstream of the first heat exchanger.

12. A chemical plant comprising:
(i) a first heat exchanger (102, 202) arranged to accept a first hydrocarbon feedstock stream (101, 201) and a partially cooled crude syngas stream (103, 203), and to generate a pre-heated first hydrocarbon feedstock stream (104, 204) and a cooled crude syngas stream (105, 205);
(ii) to inject steam (106, 206) into the pre-heated first hydrocarbon feedstock stream to generate a second hydrocarbon feedstock stream (107, 207);
(iii) a second heat exchanger (108, 208) arranged to accept the second hydrocarbon feedstock stream and a crude reformed syngas stream (109, 209), and to generate the partially cooled crude syngas stream and a pre-heated second hydrocarbon feedstock stream (110, 210) with a temperature of 400-475 °C;
(iv-a) an autothermal reformer, arranged to accept the pre-heated second hydrocarbon feedstock stream and generate an effluent stream (213), and arranged to use the effluent stream generate the crude reformed syngas stream; or
(iv-b) a gas-heated reformer having a tube side and a shell side, the gas-heated reformer arranged to accept the pre-heated second hydrocarbon feedstock stream and generate a tube side effluent; an autothermal reformer, arranged to accept the tube side effluent and generate an autothermal reformer effluent; arranged to feed the autothermal reformer effluent to the shell side of the gas-heated reformer and generate a shell side effluent, wherein the shell side effluent is used to generate the crude reformed syngas stream.

13. A chemical plant according to claim 12, wherein the chemical plant is arranged to carry out a steam reforming process according to any of claims 2 to 11.

14. A method of retrofitting a chemical plant which initially comprises a fired reformer, the method comprising the step of:
removing the fired reformer;
installing an autothermal reformer or an autothermal reformer and a gas-heated reformer;
installing a first heat exchanger and a second heat exchanger;
wherein post retrofit the chemical plant is arranged:
(i) to pre-heat a first hydrocarbon feedstock stream in the first heat exchanger by heat exchange with a partially cooled crude syngas stream, to generate a pre-heated first hydrocarbon feedstock stream;
(ii) to inject steam into the pre-heated first hydrocarbon feedstock stream to generate a second hydrocarbon feedstock stream;
(iii) to pre-heat the second hydrocarbon feedstock stream in the second heat exchanger by heat exchange with a crude reformed syngas stream, to generate the partially cooled crude syngas stream and a pre-heated second hydrocarbon feedstock stream with a temperature of 400-475 °C;
(iv-a) to carry out steam reforming on the pre-heated second hydrocarbon feedstock stream in an autothermal reformer and use effluent from the autothermal reformer to generate the crude reformed syngas stream; or
(iv-b) to carry out steam reforming on the pre-heated second hydrocarbon feedstock stream in a gas-heated reformer having a tube side and a shell side, feeding tube side effluent from the gas-heated reformer to an autothermal reformer, feeding effluent from the autothermal reformer to the shell side of the gas-heated reformer, and using shell side effluent to generate the crude reformed syngas stream.

15. A method according to claim 14, wherein post wherein post retrofit the chemical plant is arranged to carry out a steam reforming process according to any of claims 2 to 11.
